# FASCICULE DE BREVET EUROPEEN

(11) **EP 2 470 006 B1**
(45) Date de publication et mention de la délivrance du brevet: **06.01.2016**
(21) Numéro de dépôt: 10762994.1
(22) Date de dépôt: 18.08.2010
(51) Int. Cl.: A01N 25/04, A01N 37/02, A01P 7/04

(54) **UTILISATION D'UNE MICROEMULSION POUR LUTTER CONTRE LES POUX**
VERWENDUNG EINER MIKROEMULSION ZUR BEKÄMPFUNG VON LÄUSEN
USE OF A MICROEMULSION FOR CONTROLLING LICE

(30) Priorité: 24.08.2009 FR 0955753
(43) Date de publication de la demande: 04.07.2012
(73) Titulaire: Concept, 75013 Paris (FR)
(72) Inventeur: PAGNOTTA, Nadine, F-83700 Saint Raphael (FR)
(74) Mandataire: Cenatiempo, Julie Adeline Anne
(86) Numéro de dépôt international: PCT/FR2010/051731
(87) Numéro de publication internationale: WO 2011/023887

(56) Documents cités:
- WO-A1-2006/007630
- WO-A2-2005/027636
- WO-A2-2008/038108
- FR-A1- 2 377 154

## Description

La présente invention se rapporte au contrôle des poux de tête et des lentes. Les poux sont des insectes hématophages pouvant être responsables de maladies parasitaires fréquentes et contagieuses appelées pédiculoses ou phitiriases. Trois types de poux en particulier sont responsables de ces ectoparasitoses :
- *Pediculus humanus corporis,* le pou de corps, vivant dans les coutures et les plis de vêtements, ne passant sur la peau que pour se nourrir, responsable de pédiculoses corporelles,
- *Phtirius pubis,* le pou du pubis et des autres régions du corps couvertes de poils grossiers ou morpion, responsable de phitiriases pubiennes, et
- *Pediculus humanus capitis :* le pou de tête, responsable de pédiculoses du cuir chevelu et ou pédiculose de la tête.

La pédiculose de la tête est la plus répandue.

C'est une affection endémique très fréquente touchant tous les pays et tous les milieux socio-économiques. Elle affecte surtout les enfants entre 5 et 11 ans.

Le pou de tête est un petit insecte de couleur grisâtre qui se nourrit du sang de son hôte trois à cinq fois par jour. Leurs oeufs ou lentes, de forme ovale, se fixent très solidement aux cheveux. Chaque oeuf est généralement collé à un cheveu, la plupart du temps tout près de la peau.

Les poux de tête ne peuvent ni sauter, ni voler et se transmettent surtout par un contact tête à tête. Ils peuvent être présents pendant plusieurs mois sur le cuir chevelu sans que le porteur ne s'en rende compte, ce qui nuit à la mise en place de mesures prophylactiques adéquates et favorise la transmission.

L'infestation est habituellement sans symptôme durant les trois à quatre premières semaines, puis des démangeaisons apparaissent généralement, dues à la présence de substances allergènes dans la salive des parasites.

Dans le traitement des pédiculoses de la tête plusieurs approches peuvent être utilisées.

Il est notamment possible de peigner les cheveux pour éliminer les poux qui meurent rapidement une fois qu'ils sont séparés de leur hôte, mais cette solution ne permet d'éliminer qu'une partie des Poux et ne peut aucunement être utilisée seule, sauf pour les enfants en très bas âge.

L'approche la plus courante, la plus efficace et la mieux adaptée consiste à appliquer un insecticide sur le cuir chevelu.

Les premiers traitements locaux qui ont été développés sont des produits à base de pédiculicides, tels que des organophosphorés comme le malathion, des perméthrines ou des pyréthrines, associés à un agent synergique tel que le butoxyde de pipéronyle. Ces traitements, notamment ceux à base de malathion sont efficaces. Toutefois, il s'agit de produits très irritants pour le cuir chevelu, qui présentent en outre une odeur forte, désagréable et qui sont considérés comme toxiques et polluants pour l'environnement. En outre leur efficacité diminue avec le temps du fait d'une adaptation enzymatique, si bien que ce type de produit est délaissé.

On connaît aussi des traitements à base de mélange d'alcool aliphatique et d'ester carboxylique aliphatique, tel que décrit dans la demande de brevet FR-2377154, mais ces produits ne sont pas non plus satisfaisants en terme d'efficacité. Ils n'ont en outre aucune activité contre les lentes, qui constituent pourtant le problème majeur vis-à-vis de la lutte contre les poux. De plus, les préparations présentées sont instables dans le temps, délicates à mettre en oeuvre et requièrent un procédé de fabrication complexe nécessitant de chauffer et de disperser une phase huileuse dans de l'eau ou inversement. En conclusion, ces préparations ne permettent pas de traiter efficacement une pédiculose de la tête.

Il existe également des traitements locaux à base de siloxanes notamment à base de diméticone, comme ceux décrit dans la demande WO-01/19190. Ces produits agissent en noyant et déshydratant les poux dans une phase huileuse, qui meurent par asphyxie.

Néanmoins, ces produits ne sont pas suffisamment efficaces en particulier contre les lentes et nécessitent plusieurs applications répétées. En outre ils rendent les cheveux gras, et sont très inflammables.

On connaît encore des produits insecticides à base de siloxanes et d'esters d'acides gras, tels que ceux décrits dans la demande EP-1.499.184. Ces produits agissent en dissolvant la chitine qui recouvre l'exosquelette du pou, provoquant sa déshydratation puis sa mort. Ils sont connus sous le nom commercial Resultz® constitués à 50% par de la Cyclométhicone, très inflammable et toxique et à 50% par le Myristate d'isopropyle non toxique.

Néanmoins, leur efficacité sur les poux adultes est très variable et leur pouvoir sur les lentes n'a pas été établi. En outre, ces produits ne peuvent pas être appliqués chez les enfants de moins de 4 ans et leur utilisation est fastidieuse puisqu'elle nécessite une application sur cheveux secs, un temps de pose d'au moins 8 heures et un shampoing des cheveux et du cuir chevelu.

Une nouvelle application, voire deux applications sont nécessaires pour éliminer les lentes écloses après un intervalle de 7 jours.

Ces produits non rinçables rendent également les cheveux gras et sont inflammables.

Enfin, on peut citer également la demande WO2006/007630 qui décrit des produits insecticides aqueux contenant des principes actifs, donc non satisfaisants, ainsi que la demande FR-2377154 de 1978 qui décrit des émulsions huile-dans-eau pour le contrôle des poux, mais qui n'a jamais donné lieu à un produit efficace.

Il subsiste donc un besoin pour un produit palliant les inconvénients de l'art antérieur, capable d'éliminer efficacement et rapidement à la fois les poux et les lentes, qui soit non toxique, non inflammable, rinçable et facile d'utilisation en particulier pour les enfants.

C'est l'objectif de la présente invention qui se propose, pour y répondre, d'utiliser une microémulsion, sans principe actif ou molécule insecticide chimique, comme produit de contrôle des poux.

En particulier, la présente invention vise une microémulsion contenant au moins un agent tensioactif ou surfactant, un co-surfactant, une phase hydrophile et une phase huileuse. La phase huileuse est préférentiellement à base de Myristate d'isopropyle mais d'autres corps gras peuvent toutefois être utilisés en microémulsion pour le contrôle des poux selon l'invention, comme notamment des silicones ou des huiles végétales.

Un autre objet de l'invention est l'application de cette microémulsion comme médicament dans la prévention et/ou le traitement de la pédiculose de la tête. Enfin l'invention concerne également les compositions, notamment lotions et/ou shampoings, contenant cette microémulsion.

L'invention est maintenant décrite en détail en regard d'exemples avec des tableaux de comparaison de l'efficacité pédiculicide des microémulsions selon l'invention, du témoin eau distillée et d'un produit de référence de l'art antérieur Pouxit® à base de silicones, ainsi qu'en regard des dessins annexés sur lesquels :
- la figure 1A représente la mesure de la tension interfaciale dans le temps pour une microémulsion selon l'invention,
- la figure 1B représente la mesure de la tension interfaciale dans le temps pour le produit de référence de l'art antérieur Pouxit®,
- la figure 2A représente la mesure de la tension interfaciale établie lors de cycles de compression expansion à la vitesse de 1,5 minutes par cycle, pour une microémulsion selon l'invention, et
- la figure 2B représente la mesure de la tension interfaciale établie lors de cycles de compression expansion à la vitesse de 1,5 minutes par cycle, pour le produit de référence de l'art antérieur Pouxit®.

L'invention vise donc une microémulsion, sans molécule ou principe actif insecticide chimique composée par au moins un agent tensioactif ou surfactant, une phase huileuse et une phase hydrophile, pour son application comme médicament à application topique comme pour le contrôle des poux.

En effet, une telle formule est avantageusement très efficace en tant qu'agent insecticide contre les poux. Elle peut en particulier être utilisée pour son application comme médicament à application topique dans la prévention et/ou la lutte contre les poux de tête et/ou contre les lentes, notamment une lotion et/ou un shampoing anti-poux destinés à être appliqués sur le cuir chevelu et les cheveux mais aussi sur le pelage d'animaux comme les chevaux.

Par microémulsion on entend un système fluide, formé de microgouttelettes, composé d'au moins une phase hydrophile et d'une phase huileuse non miscibles entre elles, et d'un surfactant ou tensio-actif. Préférentiellement, elle comprend également un co-surfactant ou co-tensioactif. Le système qui en résulte est formé de microgouttelettes, ou micelles gonflés, constituées d'un coeur huileux ou aqueux bordé d'un film mixte au sein duquel alternent surfactant et co-surfactant. Le diamètre des microgouttelettes est compris entre 5 et 1000 nm, préférentiellement entre 20 et 200 nm.

Par principe actif ou molécule insecticide chimique, on entend toute molécule capable d'interférer biochimiquement sur des fonctions vitales des parasites en exerçant une neurotoxicité, une altération de la respiration cellulaire ou d'autres perturbations de cycles enzymatiques vitaux. Les molécules insecticides les plus courantes sont par exemple les organohalogénés, les organophosphorés, les carbamates, les pyréthrinoïdes de synthèse, les organochlorés, les benzoyl urées.

La microémulsion selon l'invention ne contient pas de principe actif ou molécule insecticide chimique. Elle agit mécaniquement en tuant les poux et les lentes par étouffement, asphyxie. Elle peut donc être utilisée pour tuer les poux de tête ou lentes par asphyxie.

Tout type de corps gras peut être utilisé pour former la microémulsion. Il peut s'agir du Myristate d'isopropyle qui est tout à fait adapté, mais également d'un autre corps gras comme notamment un silicone (ou ses dérivés) comme le diméthylsilicone, le cyclomethicone, des triglycérides à chaîne courte comme le Mygliol®812N, ou une huile végétale comme l'huile d'arachide, l'huile d'argan, l'huile de colza, l'huile de coprah, l'huile de noix, l'huile de lin, l'huile de maïs, l'huile d'olive, l'huile de palme, l'huile de ricin, l'huile de soja, l'huile de tournesol, ou encore une huile minérale comme la paraffine lourde ou légère ou tout autre corps gras.

La forme particulière de la microémulsion permet d'agir en noyant et en asphyxiant les poux.

L'ajout du couple tensioactif/co-tensioactif permet de diminuer la tension superficielle de la préparation. Cette propriété, combinée à la taille des microémulsions et à la faible viscosité de la préparation, permet de pénétrer et d'envahir l'arbre bronchique des poux vivants rapidement et complètement. Concernant les lentes, la microémulsion pénètre dans les pores à la surface de la coque qui permettent aux lentes de respirer, et entraîne ainsi l'étouffement des lentes en bouchant ces pores.

Si le corps gras utilisé pour former la microémulsion est le myristate d'isopropyle, l'efficacité de la composition est encore renforcée car ce composé est réputé capable de dissoudre la chitine de l'exosquelette du parasite et des lentes.

Selon un deuxième aspect, l'invention vise la microémulsion utile pour le contrôle des poux. Une telle microémulsion est constituée par au moins les composants suivants :
- un agent tensioactif ou surfactant,
- une phase huileuse, et
- une phase hydrophile comprenant de l'eau, ou un mélange d'eau et d'alcool, ou du glycérol, ou du polyéthylène glycol.

Il est possible d'adjoindre un co-surfactant au surfactant.

Selon un aspect particulier, l'invention a donc pour objet une microémulsion contenant au moins les composants suivants :
- un agent tensioactif ou surfactant,
- une phase huileuse à base d'au moins un corps gras, et
- une phase hydrophile comprenant de l'eau, ou un mélange d'eau et d'alcool, ou du glycérol, ou du polyéthylène glycol ou du diethylène glycol monoéthyl éther (Transcutol®).

Préférentiellement, la microémulsion selon l'invention n'est constituée que de ces seuls constituants. Elle ne contient aucun principe actif ou molécule insecticide chimique, toxique.

Le corps gras peut être choisi notamment parmi le Myristate d'isopropyle, un silicone (ou ses dérivés) comme le diméthylsilicone, le cyclomethicone, des triglycérides à chaîne courte comme le Mygliol®812N, une huile végétale comme l'huile d'arachide, l'huile d'argan, l'huile de colza, l'huile de coprah, l'huile de noix, l'huile de lin, l'huile de maïs, l'huile d'olive, l'huile de palme, l'huile de ricin, l'huile de soja, l'huile de tournesol, ou encore une huile minérale comme la paraffine lourde ou légère.

Ce corps gras est contenu dans la phase huileuse, dans le coeur des microgouttelettes de la microémulsion.

De façon préférée, la phase huileuse comprend également au moins un autre composant huileux, en particulier un mélange de glycérides d'esters de polyéthylène glycol comme le Labrafil M 1944 CS ® et/ou des triglycérides caprylocapriques comme le Labrafac CC ®, produits liquides très fluides et faiblement irritants ou des silicones.

La phase hydrophile ou polaire est composée d'eau, associée ou non à un alcool comme de l'éthanol ou de l'alcool isopropylique. Selon une variante, elle peut être composée de glycérol ou d'un polyéthylène glycol liquide.

Par ailleurs la microémulsion comprend également un agent co-tensioactif ou co-surfactant.

Le tensioactif ou le co-tensioatif sont des structures amphiphiles qui peuvent être choisies parmi :
- les agents tensioactifs anioniques comme les carboxylates, les esters sulfuriques d'alcools primaires, ou les sulfonates,
- les agents tensioactifs cationiques comme le chlorure de benzoalkonium et le bromure de cétrimide,
- les agents tensioactifs amphotères comme la lécithine et la tegobetaine, et
- les agents tensioactifs non ioniques comme les esters d'acides gras de polyols, les esters de saccharose, les esters d'acides gras polyoxyéthylénés, les esters du sorbitane, les esters du sorbitane polyoxyéthylénés, les esters d'acide gras polyoxyéthylénés ou les poloxamères.

Préférentiellement le surfactant est un mélange d'esters de polyéthylène glycol et de glycérides comme le Labrasol®.

De même, le co-surfactant est préférentiellement un mélange d'esters d'acides et de polyéthylène glycol comme le Lauroglycol 90 ®, ou un monocaprylate de propylène glycol comme le Capryol 90®.

Ces surfactants et co-surfactants sont liquides, très fluides, et faiblement voire non irritants.

Selon un mode de réalisation particulier de l'invention, la microémulsion est constituée par :
- entre 20 et 30% en poids d'un agent tensioactif,
- entre 10 et 35% en poids d'un agent co-tensioactif,
- entre 5 et 40% en poids d'un corps gras,
- entre 5 et 10% en poids d'au moins un composant huileux autre que le corps gras, et
- entre 20 et 40% en poids d'une phase hydrophile comprenant de l'eau, ou un mélange d'eau et d'alcool, ou du glycérol, ou du polyéthylène glycol.

Le corps gras est préférentiellement choisi parmi le Myristate d'isopropyle, un silicone (ou ses dérivés) comme le diméthylsilicone, le cyclomethicone, des triglycérides à chaîne courte comme le Mygliol®812N, une huile végétale comme l'huile d'arachide, l'huile d'argan, l'huile de colza, l'huile de coprah, l'huile de noix, l'huile de lin, l'huile de maïs, l'huile d'olive, l'huile de palme, l'huile de ricin, l'huile de soja, l'huile de tournesol, ou encore une huile minérale comme la paraffine lourde ou légère.

Le produit obtenu est stable, transparent, lavable à l'eau et très peu voire non irritant.

La microémulsion peut également comprendre un agent conservateur comme le benzoate de sodium et/ou un agent anti-oxydant comme le butylhydroxytoluène, le butylhydroxyanisol ou le palmitate d'ascorbyle. Préférentiellement l'agent conservateur est présent entre 0,01 et 0,5% de la phase hydrophile, et l'agent anti-oxydant entre 0,01 et 0,05% de la phase lipophile.

En perfectionnement de la composition, la microémulsion peut aussi inclure des substances répulsives à l'égard des poux comme l'essence de myrte ou de la citronnelle.

La microémulsion selon l'invention peut être obtenue par la mise en oeuvre d'un procédé comprenant les étapes suivantes :
- préparation de la phase huileuse en mélangeant au moins un composant huileux avec au moins un autre corps gras,
- solubilisation du tensioactif ou des tensio et co-tensioactifs dans la phase huileuse ou hydrophile,
- éventuellement ajout d'un anti-oxydant dans la phase huileuse,
- si la phase hydrophile est constituée d'eau et d'alcool, mélange des deux composants,
- éventuellement ajout d'un agent conservateur anti-microbien dans la phase hydrophile, et
- à température ambiante et sous agitation, adjonction de la phase hydrophile dans la phase lipophile, en goutte à goutte, préférentiellement à l'aide d'une pompe à faible débit en fabrication industrielle.

Avantageusement, les microémulsions selon l'invention sont stables, non irritantes, non toxiques et peu voire non inflammables.

Elles sont très efficaces à la fois contre les poux, en particulier les poux de tête, et contre les oeufs et larves. Elles agissent également plus rapidement que les produits de l'art antérieur. A titre d'exemple, sur des poux d'élevage on constate une mortalité supérieure à 90% après un contact d'une heure contre seulement 40% avec le produit de référence Pouxit®.

Les microémulsions selon l'invention peuvent donc être utilisées comme produits insecticides de lutte ou de prévention des poux.

Elles peuvent être utilisées également comme médicament à application topique dans la prévention et/ou le traitement des pédiculoses de la tête.

Les microémulsions selon l'invention sont préférentiellement présentées dans des compositions, notamment des compositions liquides comme des lotions et/ou shampoings pour les cheveux humains ou pour le pelage de certains animaux comme par exemple les chevaux.

Les microémulsions selon l'invention ou les compositions les contenant peuvent être appliquées sur cheveux secs ou humides. Elles sont rinçables à l'eau et faciles d'utilisation.

Un mode d'application consiste à imprégner la chevelure avec une microémulsion et à rincer la chevelure simplement avec de l'eau entre une heure et huit heures après l'application. L'opération peut être répétée une seconde fois à une semaine d'intervalle.

Le rinçage n'est pas obligatoire car les cheveux restent peignables et soyeux, sans aucun aspect gras.

Lorsque le temps d'application est prolongé, l'efficacité est renforcée, notamment au niveau des lentes.

Les caractéristiques et avantages de l'invention peuvent être illustrés par les exemples non limitatifs qui vont suivre.

### EXEMPLE 1 :

| Composant | Rôle | Proportion du composant (%) |
|---|---|---|
| Labrasol® | Tensioactif | 25,3 |
| Lauroglycol® | Co-tensioactif | 29,6 |
| Labrafil® | Phase huileuse | 7,5 |
| Myristate d'isopropyle | Phase huileuse | 10,5 |
| Ethanol | Phase hydrophile | 18,1 |
| Eau | Phase hydrophile | 9 |

### EXEMPLE 2 :

| Composant | Rôle | Proportion du composant (%) |
|---|---|---|
| Labrasol® | Tensioactif | 25,5 |
| Lauroglycol® | Co-tensioactif | 26,3 |
| Labrafil® | Phase huileuse | 7,6 |
| Myristate d'isopropyle | Phase huileuse | 14 |
| Ethanol | Phase hydrophile | 18,2 |
| Eau | Phase hydrophile | 8,4 |

### EXEMPLE 3 :

| Composant | Rôle | Proportion du composant (%) |
|---|---|---|
| Labrasol® | Tensioactif | 26,2 |
| Lauroglycol® | Co-tensioactif | 19,9 |
| Labrafil® | Phase huileuse | 7,8 |
| Myristate d'isopropyle | Phase huileuse | 21,6 |
| Ethanol | Phase hydrophile | 18,7 |
| Eau | Phase hydrophile | 5,8 |

### EXEMPLE 4 :

| Composant | Rôle | Proportion du composant (%) |
|---|---|---|
| Labrasol® | Tensioactif | 27 |
| Lauroglycol® | Co-tensioactif | 13 |
| Labrafil® | Phase huileuse | 8 |
| Myristate d'isopropyle | Phase huileuse | 29,7 |
| Ethanol | Phase hydrophile | 19,3 |
| Eau | Phase hydrophile | 3 |

### EXEMPLE 5 :

| Composant | Rôle | Proportion du composant (%) |
|---|---|---|
| Labrasol® | Tensioactif | 25 |
| Lauroglycol® | Co-tensioactif | 30 |
| Labrafil® | Phase huileuse | 7 |
| Myristate d'isopropyle | Phase huileuse | 10 |
| PEG 200 | Phase hydrophile | 28 |

### EXEMPLE 6 :

| Composant | Rôle | Proportion du composant (%) |
|---|---|---|
| Labrasol® | Tensioactif | 20 |
| Lauroglycol® | Co-tensioactif | 15 |
| Labrafil® | Phase huileuse | 17 |
| Mygliol®812 1N | Phase huileuse | 21 |
| Ethanol | Phase hydrophile | 18 |
| Eau | Phase hydrophile | 9 |

### EXEMPLE 7 :

| Composant | Rôle | Proportion du composant (%) |
|---|---|---|
| Labrasol® | Tensioactif | 20 |
| Lauroglycol® | Co-tensioactif | 20 |
| Cyclomethicone | Phase huileuse | 7 |
| Dimethicone | Phase huileuse | 20 |
| Eau | Phase hydrophile | 33 |

Des tests de contrôle ainsi que des tests d'efficacité ont été menés sur ces formulations, en comparaison avec un produit de l'art antérieur correspondant à celui décrit dans la demande WO-01/19190, connu sous le nom de POUXIT®.

### TESTS DE CONTROLE

### Contrôle de la transparence :

Il s'agit d'un test visuel simple.

Toutes les microémulsions sont transparentes et claires comme de l'eau de roche.

### Contrôle de la viscosité

Ce test consiste à mesurer la viscosité des microémulsions obtenues grâce à un viscosimètre à mobile tournant. 10 mL de chacune des formulations des exemples sont introduits dans le récipient gradué du viscosimètre thermostaté.

Les valeurs de viscosité mesurées à 25°C sont les suivantes :
- Exemple 1 : 6,45 mPa.S
- Exemple 2 : 5,93 mPa.S
- Exemple 3 : 5,15 mPa.S
- Exemple 4 : 4,30 mPa.S
- Exemple 5 : 5,00 mPa.S
- Pouxit® : 6,58 mPa.S

On constate que les viscosités sont faibles et inférieures à celle du produit de référence, Pouxit®.

### Contrôle de la stabilité

Les formulations sont exposées à l'air libre, et dans une étuve à la température de 55°C pendant au moins 15 jours.

Quelque soit le temps d'exposition, elles ne doivent pas être modifiées mais doivent rester stables du point de vue de leur transparence et de leur couleur initiale.

Après une exposition à la lumière, et à la chaleur de plus de 15 jours, les microémulsions selon l'invention gardent leur aspect transparent et leur couleur initiale.

Il en est de même lorsqu'elles sont congelées puis décongelées.

### Inflammabilité

L'inflammabilité de la formulation de l'exemple 5, dépourvue d'éthanol, est mesurée grâce à la détermination du point éclair suivant la norme ISO 3679 comparativement au Pouxit®.

Les résultats sont présentés en suivant :
- Pouxit® : 73°C
- Formulation exemple 5 : 158°C

On constate que l'inflammabilité de cette formulation est deux fois inférieure à la valeur mesurée pour le produit de référence Pouxit®.

### MESURE LA TENSION INTERFACIALE AU NIVEAU DES BRONCHES DES POUX, DE L'EXEMPLE 5 CONTRE POUXIT®

Des mesures de tension interfaciale par des méthodes de tensiométrie (tensiométrie à lame Krüss) ont été réalisées de façon comparative entre le produit de l'exemple 5 et le Pouxit.

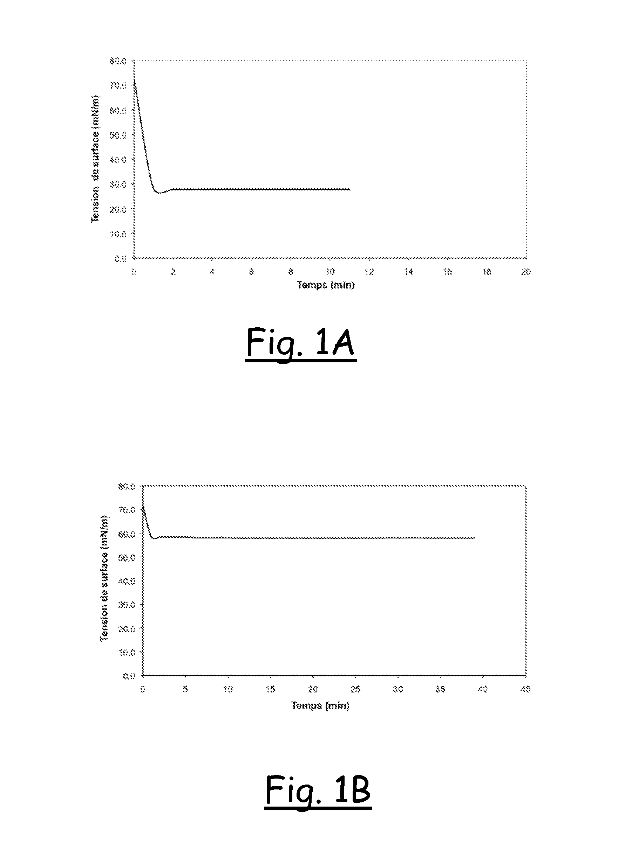

Pour l'exemple 5, comme présenté sur la figure 1A, on constate une valeur de tension interfaciale à l'équilibre très faible de 27,8 mN/m permettant ainsi un envahissement de l'arbre des poux complets du fait de la forte mouillabilité de la préparation. Cette faible valeur permet également un meilleur étalement à la surface des lentes et une obstruction de leurs voies respiratoires constatée avec la présente invention.

Des mesures effectuées dans les mêmes conditions avec le Pouxit®, présentées sur la figure 1B, donnent des valeurs de tension minimum d'équilibre beaucoup plus élevées (58 mN/m) ce qui indique une possibilité d'envahissement bronchique beaucoup moins efficace et une très mauvaise efficacité sur les lentes.

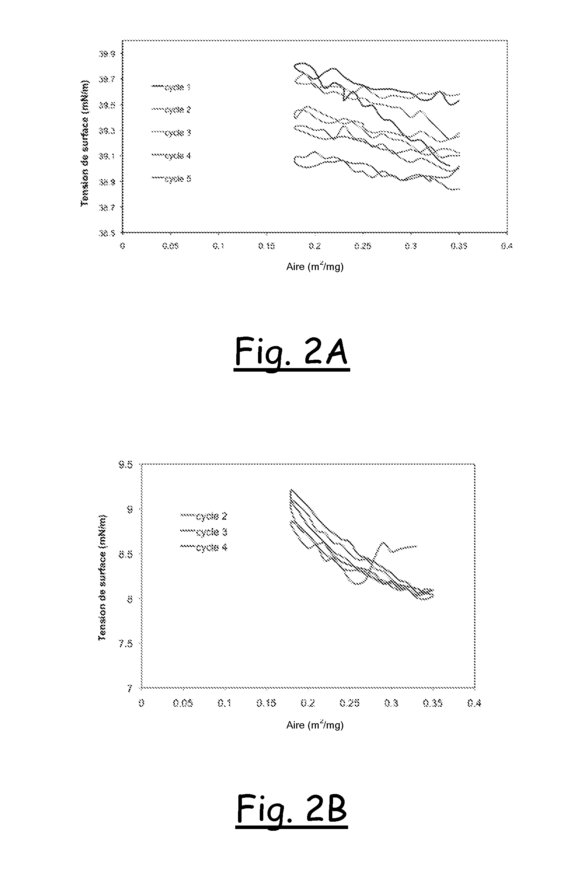

Par ailleurs des mesures du comportement du film interfacial ont également été réalisées de façon comparative entre le produit de l'exemple 5 et le Pouxit® par l'établissement des cycles de compression expansion à la vitesse de 1,5 minutes par cycle à l'aide d'une balance de Langmuir à double barrière de compression (Keller-Vachon). Les résultats sont présentés sur la figure 2A pour le produit selon l'invention et sur la figure 2B pour le Pouxit®.

On constate que la microémulsion selon l'invention présente une excellente tenue mécanique dans le temps du film interfacial contrairement au tracé obtenu dans les mêmes conditions pour le Pouxit® comme l'indiquent les échelles de tension de surface des graphiques des figures, très faibles pour le Pouxit® et élevées pour le produit selon l'invention.

### EVALUATION DE L'EFFICACITE PEDICULICIDE ET LENTICIDE DES EXEMPLES 1 ET 4 CONTRE PLACEBO ET POUXIT®

### Efficacité sur les poux

L'objectif est d'évaluer l'efficacité pédiculicide des microémulsions des exemples 1 et 4 en comparaison avec celle du produit de référence de l'art antérieur.

Pour réaliser les tests d'efficacité, le protocole opératoire est décrit en suivant. Des lots de poux sont :
- déposés dans le couvercle d'une boîte de Pétri de 5,5cm de diamètre,
- transvasés dans le fond de la boîte de Pétri tapissée d'une rondelle de papier filtre,
- immergés par 300µl d'eau distillée, de microémulsions selon la présente invention, ou de lotion Pouxit, qui diffusent sur le papier, à l'aide d'une micropipette,
- et enfin placés, boîte ouverte, dans une plus grande boîte parallélépipédique de 5,5 x 7 cm à moitié ouverte.

L'ensemble est laissé à température ambiante. On observe alors l'état des poux : effet immédiat (jusqu'à 2mn environ), à 5 minutes, à 15 minutes, à 30 minutes, à 45 minutes, à 1 heure, à 1 heure 30 min, à 2 heures 30 min, à 3 heures, à 24 heures.

A chaque observation, les poux : morts (M), « knock-down » (KD +, ++, +++, ++++) c'est-à-dire moribonds, ou vivants (V) sont notés puis comptabilisés.

Les formulations des exemples 1 et 4 ont été testées en comparaison avec un produit de référence Pouxit® et avec un témoin, de l'eau distillée seule.

La moyenne des résultats obtenus avec chaque échantillon (eau distillée, les microémulsions des exemples 1 et 4 et la lotion Pouxit®) sont présentés dans le tableau suivant :

| | **Eau distillée (Témoin)** | | | **Exemple 1** | | | **Exemple 4** | | | **Pouxit®** | | |
|---|---|---|---|---|---|---|---|---|---|---|---|---|
| | **M %** | **KD %** | **V %** | **M %** | **KD %** | **V %** | **M %** | **KD %** | **V %** | **M %** | **KD %** | **V %** |
| **T₀** | 0 | 0 | 100 | 0 | 100 | 0 | 0 | 100 | 0 | 0 | 100 | 0 |
| **T₅ₘᵢₙ** | 0 | 0 | 100 | 0 | 100 | 0 | 0 | 100 | 0 | 0 | 100 | 0 |
| **T₁₅ₘᵢₙ** | 0 | 2.22 | 97,78 | 0 | 100 | 0 | 0 | 100 | 0 | 0 | 100 | 0 |
| **T30min** | 0 | 5.44 | 94,56 | 0 | 100 | 0 | 0 | 100 | 0 | 0 | 100 | 0 |
| **T45min** | 0 | 0 | 100 | 80 | 20 | 0 | 80 | 20 | 0 | 40 | 60 | 0 |
| **T1h** | 0 | 0 | 100 | 93,33 | 6,67 | 0 | 97,78 | 2,22 | 0 | 51,11 | 48,8 9 | 0 |
| **T2h30** | 0 | 0 | 100 | 100 | 0 | 0 | 100 | 0 | 0 | 82,22 | 17,78 | 0 |
| **T3h** | 0 | 0 | 100 | 100 | 0 | 0 | 100 | 0 | 0 | 97,78 | 2,22 | 0 |
| **T24h** | 0 | 0 | 100 | 100 | 0 | 0 | 100 | 0 | 0 | 100 | 0 | 0 |

Ces résultats montrent bien que l'utilisation d'une microémulsion selon la présente invention, en tant que produit pédiculicide est aussi efficace sur les poux adultes que le produit de l'art antérieur pour un effet beaucoup plus rapide.

### Efficacité sur les lentes

Un carré de tissu de 1,5 cm de côté porteur de lentes est déposé dans le couvercle d'une boîte de Pétri (5,5 cm de diamètre).

300 µl d'eau distillée ou des microémulsions des exemples 1 et 4 ou encore du Pouxit® sont versés sur les lentes de façon que celles-ci soient totalement recouvertes et que les compositions versées diffusent rapidement sur le tissu porteur de lentes.

Les carrés de tissus et leurs lentes sont ensuite posés sur une rondelle de papier filtre, humidifié par 100µl de d'eau distillée, tapissant le fond de la boîte de Pétri.

Les boîtes de Pétri sont placées à l'étuve à 28,7 et 61% d'humidité relative durant 8 heures, puis lavées au shampoing et rincées à l'eau distillée avant d'être déposées sur une nouvelle rondelle de papier filtre.

Les boîtes de Pétri sont placées à l'étuve à 28,7 et 61% d'humidité relative durant une quinzaine de jours (jusqu'à éclosion des lentes).

Les lentes sont observées à partir du 6^{ème} jour jusqu'au 15^{ème} jour, afin de noter les éclosions et de les comptabiliser. Chaque fois que cela est possible les poux éclos sont récupérés et nourris.

Les résultats obtenus sont présentés dans les tableaux suivants.

| | Témoin Eau distillée | | Exemple 1 | | Exemple4 | | Pouxit® | |
|---|---|---|---|---|---|---|---|---|
| | Nbr Eclos | % éclosion | Nbr Eclos | % éclosion | Nbr Eclos | % éclosion | Nbr Eclos | % éclosion |
| Lentes écloses | 134 | 52,95 | 5 | 2,35 | 8 | 3,35 | 88 | 43,60 |
| Lentes mortes en cours d'éclosion | 14 | 5,55 | 8 | 3,75 | 2 | 0,85 | 17 | 8,40 |
| Lentes NON écloses | 105 | 41,50 | 199 | 93,90 | 228 | 95,80 | 97 | 48 |
| Nombre de lentes totales /produits | 253 | | 212 | | 238 | | 202 | |
| Nombre total lentes | 905 | | | | | | | |

Ces résultats montrent une excellente efficacité des compositions des exemples 1 et 4 selon la présente invention.

Après la durée du test environ 95% des lentes n'éclosent pas pour les compositions des exemples 1 et 4 alors que le produit du commerce Pouxit® a un résultat proche de celui du placébo.

### EVALUATION DE L'EFFICACITE PEDICULICIDE ET LENTICIDE DE L'EXEMPLE 5 CONTRE PLACEBO ET POUXIT®

L'objectif est d'évaluer l'efficacité pédiculicide et lenticide des microémulsions de l'exemple 5 en comparaison avec celle du produit de référence de l'art antérieur.

Cette formulation est particulièrement intéressante car dépourvue d'alcool et donc très faiblement inflammable comme le montre la détermination du point éclair.

### Efficacité sur les poux :

Des lots de poux sont déposés dans le couvercle d'une boîte de Pétri de 5,5cm de diamètre et immergés par 300µl d'eau distillée, ou par 300µl de la microémulsion de l'exemple 5 ou par 300µl de Pouxit®, à l'aide d'une microcropipette.

L'ensemble est transvasé avec l'eau, la microémulsion de l'exemple 5 ou le Pouxit®, dans le fond de la boîte de Pétri tapissée d'une rondelle de papier filtre, où le soluté diffuse rapidement.

Pendant le temps de contact (8 heures), on observe alors l'état des poux : à 30 minutes, à 1 heure, à 1 heure 30 min, à 2 heures, à 3 heures et à 8 heures. Après le temps de contact, les poux sont lavés avec un shampooing doux, puis rincés à l'eau distillée avant d'être déposés sur une nouvelle rondelle de papier filtre, placée au fond de la boîte de Pétri.

L'état des poux est alors observé : effet immédiat (jusqu'à 5mn environ), après 1 heure et après 24 heures.

En parallèle un test sans rinçage est réalisé. Des lots de poux sont déposés dans le couvercle d'une boîte de Pétri de 5,5cm de diamètre et immergés par 300µl de la microémulsion de l'exemple 5 à l'aide d'une microcropipette.

L'ensemble avec la microémulsion de l'exemple 5, est transvasé dans le fond de la boîte de Pétri tapissée d'une rondelle de papier filtre, où le soluté diffuse rapidement.

Pendant le temps de contact sans rinçage (24 heures), on observe alors l'état des poux :
- à 30 minutes, à 1 heure, à 1 heure 30 min, à 2 heures, à 3 heures et à 8 heures,
- puis après 8 heures 05, après 9h00 et après 24 heures.

A chaque observation, les poux : morts (M), « knock-down » (KD +, ++, +++, ++++) c'est-à-dire moribonds, ou vivants (V) sont notés puis comptabilisés.

Les résultats obtenus sont présentés dans les tableaux suivants :

| **Contact (8 heures)** | | **M %** | **KD %** | **V %** |
|---|---|---|---|---|
| **30 minutes** | Témoin Eau | 0 | 0 | 100 |
| | Pouxit® | 0 | 100 | 0 |
| | Exemple 5 | 0 | 100 | 0 |
| | Exemple 5 sans rinçage | 0 | 100 | 0 |
| **1 heure** | Témoin Eau | 0 | 0 | 100 |
| | Pouxit® | 0 | 100 | 0 |
| | Exemple 5 | 0 | 100 | 0 |
| | Exemple 5 sans rinçage | 5,20 | 94,80 | 0 |
| **1 heure 30** | Témoin Eau | 0 | 4,05 | 95,95 |
| | Pouxit® | 95,10 | 4,90 | 0 |
| | Exemple 5 | 0 | 100 | 0 |
| | Exemple 5 sans rinçage | 0 | 100 | 0 |
| **2 heures** | Témoin Eau | 0 | 4,05 | 95,95 |
| | Pouxit® | 95,1 | 4,90 | 0 |
| | Exemple 5 | 91,05 | 8,95 | 0 |
| | Exemple 5 sans rinçage | 94,3 | 5,70 | 0 |
| **3 heures** | Témoin Eau | 1,75 | 2,30 | 95,95 |
| | Pouxit® | 99,40 | 0,60 | 0 |
| | Exemple 5 | 94,65 | 5,35 | 0 |
| | Exemple 5 sans rinçage | 98,45 | 1,55 | 0 |
| **8 heures** | Témoin Eau | 3,50 | 1,75 | 94,75 |
| | Pouxit® | 100 | 0 | 0 |
| | Exemple 5 | 100 | 0 | 0 |
| | Exemple 5 sans rinçage | 100 | 0 | 0 |

| **Après rinçage (Pouxit et Ex 5) ou après 8 heures de contact sans rinçage (Ex 5)** | | **M %** | **KD %** | **V %** |
|---|---|---|---|---|
| **5 minutes** | Témoin Eau | 4,65 | 2,35 | 93 |
| | Pouxit® | 100 | 0 | 0 |
| | Exemple 5 | 100 | 0 | 0 |
| | Exemple 5 sans rinçage | 100 | 0 | 0 |
| **1 heure** | Témoin Eau | 6,40 | 0 | 93,60 |
| | Pouxit® | 100 | 0 | 0 |
| | Exemple 5 | 100 | 0 | 0 |
| | Exemple 5 sans rinçage | 100 | 0 | 0 |
| **24 heures** | Témoin Eau | 13,95 | 1,20 | 84,85 |
| | Pouxit® | 100 | 0 | 0 |
| | Exemple 5 | 100 | 0 | 0 |
| | Exemple 5 sans rinçage | 100 | 0 | 0 |

Ces résultats montrent bien qu'une microémulsion présente une efficacité aussi importante que celle du produit de référence, selon un protocole avec ou sans rinçage.

### Efficacité sur les lentes :

Un carré de tissu de 1,5cm de côté porteur de lentes, est déposé dans le couvercle d'une boîte de Pétri (5,5cm de diamètre).

300µl d'eau distillée ou de la microémulsion de l'exemple 5 ou de Pouxit® sont versés sur les lentes, de façon à ce que celles-ci soient totalement recouvertes et que les compositions diffusent rapidement sur le tissu porteur des lentes.

Les carrés de tissus et leurs lentes sont ensuite posés sur une rondelle de papier filtre humidifiée par 100µl d'eau distillée, tapissant le fond d'une boîte de Pétri (5,5cm de diamètre).

Les boîtes sont placées à l'étuve à 28,7°C et 61% d'humidité relative durant 8 heures, puis lavées au shampooing et rincées à l'eau distillée avant d'être déposées sur une nouvelle rondelle de papier filtre.

Les boîtes sont placées à l'étuve à 28,7°C et 61% d'humidité relative durant une quinzaine de jours (jusqu'à l'éclosion des lentes).

Les lentes sont observées à partir du 6ème jour jusqu'au 15ème, afin de noter les éclosions et de les comptabiliser. Chaque fois que possible les poux éclos sont récupérés et nourris.

En parallèle, un test sans rinçage est réalisé. Un carré de tissu de 1,5cm de côté porteur de lentes, est déposé dans le couvercle d'une boîte de Pétri (5,5cm de diamètre).

300µl de la microémulsion de l'exemple 5 sont versés sur les lentes, de façon à ce que celles-ci soient totalement recouvertes et diffusent rapidement sur le tissu porteur des lentes.

Les carrés de tissus et leurs lentes sont ensuite posés sur une rondelle de papier filtre humidifiée par 100µl d'eau distillée, tapissant le fond d'une boîte de Pétri (5,5cm de diamètre).

Les boîtes sont placées à l'étuve à 28,9°C et 58% d'humidité relative sans rinçage, durant une quinzaine de jours (jusqu'à l'éclosion des lentes).

Les lentes sont observées à partir du 6ème jour jusqu'au 15ème, afin de noter les éclosions et de les comptabiliser. Chaque fois que possible les poux éclos sont récupérés et nourris.

Les résultats obtenus sont présentés dans les tableaux suivants :

| | Eau distillée Témoin | Pouxit® | Exemple 5 | Exemple 5 sans rinçage |
|---|---|---|---|---|
| | (%) | (%) | (%) | (%) |
| Lentes écloses | 59,80 | 31,60 | 11 | 6,65 |
| Lentes mortes en cours d'éclosion | 3,85 | 2,10 | 5 | 7,70 |
| Lentes NON écloses | 36,35 | 66,30 | 84 | 85,65 |

On constate que le produit selon l'invention est plus efficace sur les poux que le produit de référence. Avec ou sans rinçage, dans les conditions de cette étude, la microémulsion permet de tuer 84% de lentes contre 66,30% pour le produit de référence.

## Revendications

1. Microémulsion composée par au moins un agent tensioactif ou surfactant, une phase huileuse et une phase hydrophile, sans principe actif ou molécule insecticide chimique, pour son application comme médicament à application topique dans la prévention et/ou la lutte contre les poux de tête et/ou contre les lentes.

2. Microémulsion selon la revendication 1, pour son application comme lotion et/ou shampoing anti-poux destinés à être appliqués sur le cuir chevelu et les cheveux humains ou sur le pelage d'animaux.

3. Microémulsion selon la revendication 1 ou 2, pour son utilisation comme médicament destiné à tuer les poux de tête ou les lentes par asphyxie.

4. Microémulsion selon l'une des précédentes revendications, pour son application comme médicament à application topique dans la prévention et/ou le traitement de la pédiculose de la tête.

5. Microémulsion selon l'une des précédentes revendications, **caractérisée en ce que** la phase hydrophile comprend de l'eau, ou un mélange d'eau et d'alcool, ou du glycérol, ou du polyéthylène glycol.

6. Microémulsion selon la revendication 5, **caractérisée en ce que** la phase huileuse inclue au moins un corps gras et un composant huileux autre que le corps gras.

7. Microémulsion selon la revendication 5 ou 6, **caractérisée en ce qu'**elle comprend également un agent co-surfactant ou co-tensioactif.

8. Microémulsion selon l'une des précédentes revendications, **caractérisée en ce qu'**elle est constituée par :
- entre 20 et 30% en poids d'un agent tensioactif ou surfactant,
- entre 10 et 35% en poids d'un agent co-tensioactif ou co-surfactant,
- entre 5 et 40% en poids d'un corps gras,
- entre 5 et 10% en poids d'au moins un composant huileux autre que le corps gras,
- entre 20 et 40% en poids d'une phase hydrophile comprenant de l'eau, ou un mélange d'eau et d'alcool, ou du glycérol, ou du polyéthylène glycol.

9. Microémulsion selon l'une des revendications 6 à 8, **caractérisée en ce que** le corps gras est le Myristate d'isopropyle.

10. Microémulsion selon l'une des revendications 6 à 8, **caractérisée en ce que** le corps gras est une silicone, une huile végétale ou une huile minérale.

11. Microémulsion selon l'une des revendications 6 à 10, **caractérisée en ce que** le composant huileux est un mélange de glycérides d'esters de polyéthylène glycol.

12. Microémulsion selon l'une des revendications 6 à 11, **caractérisée en ce que** l'agent tensioactif est un mélange d'esters de polyéthylène glycol et de glycérides.

13. Microémulsion selon l'une des revendications 7 à 12, **caractérisée en ce que** l'agent co-surfactant ou co-tensioactif est un mélange d'esters d'acides et de polyéthylène glycol ou un mélange de monocaprylate de propylène glycol.

14. Microémulsion selon l'une des précédentes revendications, **caractérisée en ce qu'**elle comprend également un agent anti-oxydant et/ou un agent conservateur.

## Patentansprüche

1. Mikroemulsion zusammengesetzt aus wenigstens einem Tensid oder obeflächenaktiven Mittel, einer Ölphase und einer hydrophilen Phase, ohne Wirkstoff oder Molekül eines chemischen Insektizids, zur Anwendung als Medikament zum topischen Anwenden für die Prävention und/oder Bekämpfung von Kopfläusen und/oder von Nissen.

2. Mikroemulsion nach Anspruch 1, zu deren Anwendung als Lotion und/oder Waschmittel gegen Läuse, die dazu bestimmt sind, auf behaartes Leder, menschliche Haare oder tierische Felle angewendet zu werden.

3. Mikroemulsion nach Anspruch 1 oder 2, zu deren Verwendung als Medikament, das dazu bestimmt ist, Kopfläuse oder Nissen durch Ersticken zu töten.

4. Mikroemulsion nach einem der vorhergehenden Ansprüche zu deren Anwendung als Medikament zum topischen Anwenden bei der Prävention und/oder der Behandlung von Lausbefall des Kopfes.

5. Mikroemulsion nach einem der vorhergehenden Ansprüche, **dadurch gekennzeichnet, dass** die hydrophile Phase Wasser oder eine Mischung von Wasser und Alkohol oder Glycerol oder Polyethylenglykol aufweist.

6. Mikroemulsion nach Anspruch 5, **dadurch gekennzeichnet, dass** die Ölphase wenigstens ein Fett und neben dem Fett einen öligen Bestandteil umfasst.

7. Mikroemulsion nach Anspruch 5 oder 6, **dadurch gekennzeichnet, dass** diese auch ein weiteres oberflächenaktives Mittel oder Cotensid aufweist.

8. Mikroemulsion nach einem der vorhergehenden Ansprüche, **dadurch gekennzeichnet, dass** sich diese zusammensetzt aus:
- zwischen 20 und 30 Gewichts-% eines Tensids oder oberflächenaktiven Mittels,
- zwischen 10 und 35 Gewichts-% eines Cotensids oder weiteren oberflächenaktiven Mittels,
- zwischen 5 und 40 Gewichts-% eines Fetts,
- zwischen 5 und 10 Gewichts-% eines weiteren Ölbestandteils neben dem Fett,
- zwischen 20 und 40 Gewichts-% einer hydrophilen Phase, die Wasser oder eine Mischung von Wasser und Alkohol oder Glycerol oder Polyethylenglykol aufweist.

9. Mikroemulsion nach einem der Ansprüche 6 bis 8,
**dadurch gekennzeichnet, dass** das Fett Isopropylmyristat ist.

10. Mikroemulsion nach einem der Ansprüche 6 bis 8,
**dadurch gekennzeichnet, dass** das Fett ein Silikon, ein Pflanzenöl oder ein Mineralöl ist.

11. Mikroemulsion nach einem der Ansprüche 6 bis 10,
**dadurch gekennzeichnet, dass** der ölige Bestandteil eine Mischung von Glyceriden von Polyethylenglykolestern ist.

12. Mikroemulsion nach einem der Ansprüche 6 bis 11,
**dadurch gekennzeichnet, dass** das Tensid eine Mischung von Polyethylenglykolestern und Glyceriden ist.

13. Mikroemulsion nach einem der Ansprüche 7 bis 12,
**dadurch gekennzeichnet, dass** das weitere oberflächenaktive Mittel oder das Cotensid eine Mischung von Säurestern und von Polyethylenglykol oder eine Mischung von Polyethylenglykol-Monocaprylat ist.

14. Mikroemulsion nach einem der vorhergehenden Ansprüche, **dadurch gekennzeichnet, dass** diese auch ein Antioxidans und/oder ein Konservierungsmittel enthält.

## Claims

1. A microemulsion composed of at least one surface-active agent or surfactant, an oily phase and a hydrophilic phase, without any active principle or chemical insecticide molecule, for application thereof as a medication for topical application in preventing and/or combatting head lice and/or nits.

2. A microemulsion according to claim 1, for application thereof as an anti-lice lotion and/or shampoo intended to be applied to the scalp and human hair or to animal fur.

3. A microemulsion according to claim 1 or 2, for use thereof as a medication intended to kill head lice or nits by asphyxia.

4. A microemulsion according to one of the preceding claims, for application thereof as a medication for topical application in the prevention and/or treatment of head pediculosis.

5. A microemulsion according to one of the preceding claims, **characterised in that** the hydrophilic phase comprises water, or a mixture of water and alcohol, or glycerol, or polyethylene glycol.

6. A microemulsion according to claim 5, **characterised in that** the oily phase includes at least one fat and an oily component other than the fat.

7. A microemulsion according to claim 5 or 6, **characterised in that** it also comprises a co-surfactant or surface active co-agent.

8. A microemulsion according to one of the preceding claims, **characterised in that** it is formed by:
- between 20 wt% and 30 wt% of a surface active agent or surfactant,
- between 10 wt% and 35 wt% of a surface active co-agent or co-surfactant,
- between 5 wt% and 40 wt% of a fat,
- between 5 wt% and 10 wt% of at least one oily component other than the fat,
- between 20 wt% and 40 wt% of a hydrophilic phase comprising water, or a mixture of water and alcohol, or glycerol, or polyethylene glycol.

9. A microemulsion according to one of claims 6 to 8, **characterised in that** the fat is isopropyl myristate.

10. A microemulsion according to one of claims 6 to 8, **characterised in that** the fat is a silicone, a plant oil or a mineral oil.

11. A microemulsion according to one of claims 6 to 10, **characterised in that** the oily component is a mixture of glycerides and polyethylene glycol esters.

12. A microemulsion according to one of claims 6 to 11, **characterised in that** the surface active agent is a mixture of polyethylene glycol esters and glycerides.

13. A microemulsion according to one of claims 7 to 12, **characterised in that** the co-surfactant or surface active co-agent is a mixture of acid esters and polyethylene glycol or a propylene glycol monocaprylate mixture.

14. A microemulsion according to one of the preceding claims, **characterised in that** it also comprises an antioxidant and/or a preservative.
